# EUROPÄISCHE PATENTANMELDUNG

(11) **EP 4 644 290 A1**
(43) Veröffentlichungstag der Anmeldung: **05.11.2025**
(21) Anmeldenummer: 24173531.5
(22) Anmeldetag: 30.04.2024
(51) Int. Cl.: B65D 90/62, B65G 69/18

(54) **VERSCHLUSSEINHEIT FÜR EINEN SCHÜTTGUTCONTAINER, CONTAINERSYSTEM, ENTLEERSTATION SOWIE CONTAINERENTLEERSYSTEM**

(71) Anmelder: Ucon Container System GmbH, 77756 Hausach (DE)
(72) Erfinder: ALBACH, Ernst, 77716 Hausach (DE); LAUSTER, Ulrich, 77746 Schutterwald (DE)
(74) Vertreter: Westphal, Mussgnug & Partner Patentanwälte mbB

(57) **Zusammenfassung**

Verschlusseinheit (24) für einen Schüttgutcontainer (12), umfassend
• ein Verschlusselement (26) und
• eine Trägereinheit (28) mit einem Trägerelement (30) und einer in dem Trägerelement (30) angeordneten, eine Öffnungslängsachse (32) aufweisende Entleeröffnung (34),

wobei das Verschlusselement (26) zwischen einer Schließposition, in der das Verschlusselement (26) die Entleeröffnung (34) verschließt, und einer Öffnungsposition, in der das Verschlusselement (26) die Entleeröffnung (34) zumindest teilweise freigibt, verschiebbar ist, und
wobei die Trägereinheit (28) Containerverbindungsmittel (36) zum zerstörungsfrei lösbaren Anordnen der Verschlusseinheit (24) an dem Schüttgutcontainer (12) aufweist,
sowie Containersystem (10) mit einer derartigen Verschlusseinheit,
sowie Entleerstation (64) für ein Containersystem (10),
sowie Containerentleersystem mit einem Containersystem (10) und einer Entleerstation (64).

## Beschreibung

Die Erfindung betrifft eine Verschlusseinheit für einen Schüttgutcontainer, ein Containersystem, eine Entleerstation sowie ein Containerentleersystem.

Schüttgutcontainer sind regelmäßig als Container mit einem integrierten Auslasstrichter ausgebildet, an dessen verjüngtem Ende ein Auslass mit einer eine Auslassöffnung angeordnet ist. Üblicherweise ist der Auslasstrichter vertikal nach unten weisend ausgerichtet, sodass bei geöffnetem Auslass Schüttgut durch die Auslassöffnung aus dem Schüttgutcontainer herausfließen kann.

Aus dem Stand der Technik ist es bekannt, zum Verschließen des Auslasses kegelförmige Verschlusselemente zu verwenden, die derart in dem Auslasstrichters des Schüttgutcontainers angeordnet sind, dass die Kegelspitze des Verschlusselements in Richtung des sich öffnenden Auslasstrichters weist und der Rand des Kegelfußes umlaufend an der Innenwandung des Auslauftrichters anliegt. Aus dem Stand der Technik ist es weiter bekannt, das Verschlusselement derart federbelastet in dem Auslauftrichter anzuordnen, dass das unbetätigte Verschlusselement den Auslass verschließt und der Auslass durch Betätigen des Verschlusselements entgegen der Federkraft geöffnet werden kann.

Zum dosierten Entnehmen von Schüttgut aus Schüttgutcontainern sind sogenannte Entleerstationen bekannt, auf die ein Schüttgutcontainer aufgesetzt werden kann. Bekannte Entleerstationen sind insbesondere dazu ausgebildet, das Verschlusselement durch Verschieben entgegen der Federkraft zu betätigen.

Als druckschriftlicher Stand der Technik werden die DE 44 16 009 A1 und die DE 198 53 599 A1 genannt.

Die beschriebenen Entleerstationen können nur mit solchen Schüttgutcontainern verwendet werden, die ein entsprechendes Verschlusssystem sowie eine entsprechende Schnittstelle aufweisen. Das, insbesondere automatisierte, dosierte Entnehmen von Schüttgut aus einem Schüttgutcontainer setzt somit einen entsprechend ausgerüsteten Schüttgutcontainer voraus. Nachteilig ist daran vor allem, dass die Nachrüstung von Schüttgutcontainern mit einem derartigen Verschlusssystem technisch und wirtschaftlich aufwändig und daher unattraktiv ist. Faktisch ist damit eine Entnahme von Schüttgut aus einem Schüttgutcontainer mittels den bekannten Entleerstationen nur bei solchen Schüttgutcontainern möglich, die von vorne herein zur Verwendung mit einer derartigen Entleerstation vorgesehen und dementsprechend ausgerüstet wurden.

Der Erfindung liegt daher die Aufgabe zugrunde, ein System bereitzustellen, das das Ausrüsten von Schüttgutcontainern derart, dass sie zur Verwendung mit Entleerstationen geeignet sind, technisch einfacher und wirtschaftlich attraktiver macht.

Die Aufgabe wird erfindungsgemäß gelöst durch eine Verschlusseinheit für einen Schüttgutcontainer mit den Merkmalen des Patentanspruchs 1. Die Aufgabe wird erfindungsgemäß außerdem gelöst durch ein Containersystem mit den Merkmalen des Patentanspruchs 9. Des Weiteren wird die Aufgabe erfindungsgemäß gelöst durch eine Entleerstation mit den Merkmalen des Patentanspruchs 12. Darüber hinaus wird die Aufgabe erfindungsgemäß gelöst durch ein Containerentleersystem mit den Merkmalen des Patentanspruchs 15.

Vorteilhafte Ausgestaltungen und Weiterbildungen der Erfindung sind in den abhängigen Ansprüchen angegeben.

Eine erfindungsgemäße Verschlusseinheit für einen Schüttgutcontainer umfasst ein Verschlusselement und eine Trägereinheit mit einem Trägerelement und einer in dem Trägerelement angeordneten, eine Öffnungslängsachse aufweisende Entleeröffnung. Das Verschlusselement ist zwischen einer Schließposition, in der das Verschlusselement die Entleeröffnung verschließt, und einer Öffnungsposition, in der das Verschlusselement die Entleeröffnung zumindest teilweise freigibt, verschiebbar. Darüber hinaus weist die Trägereinheit Containerverbindungsmittel zum zerstörungsfrei lösbaren Anordnen der Verschlusseinheit an dem Schüttgutcontainer auf. Die derart ausgebildete Verschlusseinheit kann auf einfache Weise nachträglich an den Schüttgutcontainer angebracht werden. Vorzugsweise liegt das Verschlusselement in der Schließposition ausschließlich an der Trägereinheit an. Das Verschlusselement ist vorzugsweise kegelförmig ausgebildet, und besonders bevorzugt derart an dem Trägerelement angeordnet, dass eine Kegelspitze des Verschlusselements von dem Trägerelement weg weist. Das Trägerelement ist vorzugsweise plattenförmig ausgebildet. Die Öffnungslängsachse kann zentral in der Entleeröffnung angeordnet sein. Vorzugsweise ist das Verschlusselement entlang der Öffnungslängsachse verschiebbar.

Die Containerverbindungsmittel können Gewindebohrungen und/oder Gewindestifte umfassen, die vorzugsweise an dem Trägerelement angeordnet sind.

In einer bevorzugten Ausführungsform weist das Verschlusselement eine Verschlussdichtung auf, die in der Schließposition an dem Trägerelement anliegt. Der dichtende Schließkontakt erfolgt damit zwischen dem Verschlusselement und der Trägereinheit und ist somit unabhängig von dem Schüttgutcontainer. Vorzugsweise ist die Verschlussdichtung in der Schließposition radial an einem Rand der Entleeröffnung angeordnet, bezogen auf die Öffnungslängsachse.

Die Trägereinheit kann eine Flanschdichtung aufweisen, die, bezogen auf die Öffnungslängsachse, radial außerhalb der Verschlussdichtung angeordnet ist. Dadurch kann die Verschlusseinheit für unterschiedliche Schüttgutcontainer geeignet sein. Vorzugsweise ist die Flanschdichtung radial innerhalb der Containerverbindungsmittel angeordnet.

An einer Oberseite des Verschlusselements kann ein entlang der Öffnungslängsachse ausgerichteter Stößel angeordnet sein. Der Stößel ist dafür vorgesehen, in den Schüttgutcontainer hineinzuragen. Dadurch kann der Entstehung von Schüttgutbrücken im Schüttgutcontainer entgegengewirkt werden. Vorzugsweise ist der Stößel auf der Kegelspitze des Verschlusselements angeordnet. Ein gegenüber der Kegelspitze angeordnetes Ende des Stößels kann spitz ausgebildet sein. Unter einer Anordnung entlang der Öffnungslängsachse wird hier und im Folgenden eine Anordnung parallel zu der oder auf der Öffnungslängsachse bezeichnet. Vorzugsweise ist der Stößel damit zentral über der Entleeröffnung angeordnet.

Das Verschlusselement kann, vorzugsweise an einer Unterseite, ein Spannelement zum unmittelbaren Zusammenwirken mit einem Schnellspannsystem aufweisen. Dies erlaubt eine Betätigung des Verschlusselements mittels einem derartigen Spannsystem. Das Spannelement kann auf der Öffnungslängsachse angeordnet sein. Vorzugsweise ist das Spannelement als Spannzapfen ausgebildet. Die Begriffe "Oberseite" und "Unterseite" beziehen sich hier und im Folgenden auf die bestimmungsgemäße Verwendung der Verschlusseinheit. Die Oberseite des Verschlusselements und die Unterseite des Verschlusselements bezeichnen damit vorzugsweise einander gegenüberliegende Seiten des Verschlusselements. Das Spannelement ist damit vorzugsweise gegenüber der Kegelspitze des Verschlusselements angeordnet.

In einer Weiterbildung der Erfindung weist die Trägereinheit mindestens ein Stationsverbindungsmittel zum Koppeln der Verschlusseinheit mit einer Entleerstation auf. Das mindestens eine Stationsverbindungsmittel kann als Bohrung, insbesondere Gewindebohrung, ausgebildet sein. Insbesondere kann das mindestens eine Stationsverbindungsmittel derart ausgebildet sein, dass die Entleerstation mit dem mindestens einen Stationsverbindungsmittel verriegelt werden kann. Vorzugsweise ist das mindestens eine Stationsverbindungsmittel bezogen auf die Öffnungslängsachse radial außerhalb der Containerverbindungsmittel angeordnet.

Ein erfindungsgemäßes Containersystem umfasst die zuvor beschriebene Verschlusseinheit und einen Schüttgutcontainer mit einer Containerauslassöffnung und einem an der Containerauslassöffnung angeordneten Containerflansch, wobei die Containerverbindungsmittel der Verschlusseinheit an dem Containerflansch angeordnet sind. Auf diese Art und Weise kann ein bestehender Schüttgutcontainer auf einfache Weise mit einer Verschlusseinheit nachgerüstet werden. Vorzugsweise sind die Verbindungsmittel der Verschlusseinheit mit dem Containerflansch kompatibel ausgebildet. Der Containerflansch kann als Schraubflansch ausgebildet sein. Vorzugsweise sind die Verbindungsmittel als Gewindestifte ausgebildet, deren Positionierung einem Lochbild des Containerflanschs entspricht.

Der Schüttgutcontainer ist vorzugweise als Container mit einem integrierten, vorzugsweise konisch ausgebildeten Auslasstrichter ausgebildet, an dessen verjüngtem Ende eine Containerauslassöffnung angeordnet ist. Beim bestimmungsgemäßen Gebrauch des Schüttgutcontainers ist der Auslasstrichter vorzugsweise vertikal nach unten weisend ausgerichtet. Die Containerauslassöffnung ist vorzugsweise am tiefsten Punkt des Schüttgutcontainers angeordnet. Der Schüttgutcontainer kann eine Containertragstruktur umfassen.

Die Flanschdichtung ist vorzugsweise zwischen dem Containerflansch und dem Trägerelement angeordnet, sodass die Verbindung des Schüttgutcontainers und der Verschlusseinheit zur Umgebung hin abgedichtet werden kann. Durch den Durchmesser der Flanschdichtung kann ein maximaler Innendurchmesser der Containerauslassöffnung vorgegeben sein.

In einer bevorzugten Ausführungsform der Erfindung ist das Verschlusselement in der Schließposition in der Containerauslassöffnung angeordnet. Vorzugsweise ist die Containerauslassöffnung zur Entleeröffnung hin ausschließlich durch das in der Schließposition mit der Verschlussdichtung am Rand der Entleeröffnung anliegende Verschlusselement abdichtbar. Die Abdichtung der Containerauslassöffnung zur Umgebung hin ist vorzugsweise ausschließlich mittels der Flanschdichtung realisiert. Vorzugsweise ist ein maximaler Außendurchmesser des Verschlusselements kleiner als ein minimaler Innendurchmesser der Containerauslassöffnung ausgebildet.

Vorzugsweise ist das Verschlusselement in der Öffnungsposition gegenüber der Schließposition weiter in den Schüttgutcontainer hinein verschoben. Dadurch kann zwischen dem Verschlusselement, insbesondere der Verschlussdichtung, und dem Rand der Entleeröffnungeine Lücke geschaffen werden, sodass das Verschlusselement die Entleeröffnung zumindest teilweise freigibt.

Eine erfindungsgemäße Entleerstation, insbesondere für das zuvor beschriebene Containersystem, umfasst eine Stationstragstruktur, eine Entleereinheit und eine Hubeinheit. Dabei ist die Entleereinheit gegenüber der Stationstragstruktur mittels der Hubeinheit verschiebbar gelagert. Außerdem weist die Entleereinheit eine Systemschnittstelle zum Anordnen der Entleereinheit an dem Containersystem auf. Dabei umfasst die Systemschnittstelle eine Betätigungseinheit zum Betätigen des Containersystems und mindestens ein von der Betätigungseinheit verschiedenes Verbindungsmittel zum unmittelbaren Verbinden der Entleereinheit mit dem Containersystem. Die Hubeinheit kann insbesondere zum vertikalen Verschieben der Entleereinheit ausgebildet sein.

In einer bevorzugten Ausführungsform der Erfindung weist die Betätigungseinheit ein Schnellspannsystem zum unmittelbaren Zusammenwirken mit dem Containersystem auf. Damit ist die Betätigungseinheit vorzugsweise unmittelbar mit dem Spannelement der Verschlusseinheit koppelbar. Mittels einer derartigen Betätigungseinheit sind können grundsätzlich sämtliche Kräfte und Momente, insbesondere aber Zug- und Druckkräfte, von der Systemschnittstelle auf das Verschlusselement übertragen werden. Die im dem Stand der Technik vorgesehene Federkraftbeaufschlagung des Verschlusselements kann damit entfallen. Das Schnellspannsystem kann als Nullpunkt-Spannsystem ausgebildet sein.

Das mindestens eine Verbindungsmittel kann zum Festlegen der Position der Entleerstation gegenüber dem Containersystem ausgebildet sein, vorzugsweise in allen Freiheitsgraden. Vorzugsweise umfasst das mindestens eine Verbindungsmittel einen drehbar angeordneten Verriegelungszapfen zum Anordnen der Entleereinheit an dem Containersystem. Besonders bevorzugt ist die Entleereinheit mittels des Verriegelungszapfens an einem des mindestens einen Stationsverbindungsmittels verriegelbar. Der Verriegelungszapfen kann drehbar ausgebildet sein, sodass mittels des Verriegelungszapfens eine Verriegelung nach dem Prinzip eines Bajonettverschlusses herstellbar ist. Das mindestens eine Verbindungsmittel kann dabei außerdem die Funktion haben, die Entleereinheit gegenüber der Verschlusseinheit auszurichten.

Ein erfindungsgemäßes Containerentleersystem umfasst das zuvor beschriebene Containersystem sowie die zuvor beschriebene Entleerstation. Dabei ist das mindestens eine Verbindungsmittel der Entleerstation unmittelbar mit der Verschlusseinheit koppelbar, und das Verschlusselement ist mittels der Betätigungseinheit von der Schließposition in die Öffnungsposition und zurück bewegbar. Vorzugsweise ist das mindestens eine Verbindungsmittel derart mit der Verschlusseinheit koppelbar, dass die Systemschnittstelle an der Verschlusseinheit, besonders bevorzugt an der Unterseite des Verschlusselements, anliegt.

Das Entleeren des Schüttgutcontainers mit dem zuvor beschriebenen Containerentleersystem kann folgendermaßen erfolgen: Zunächst kann das Containersystem auf der Entleerstation angeordnet werden, vorzugsweise indem die Containertragstruktur auf der Stationstragstruktur angeordnet wird. Anschließend kann die Entleereinheit mittels der Hubeinheit in Richtung des Containersystems, also nach oben, verschoben werden. Auf diese Weise kann die Systemschnittstelle auf die Verschlusseinheit zu bewegt werden. Sobald das mindestens eine Verbindungsmittel mit dem mindestens einen Stationsverbindungsmittel in Wirkverbindung tritt, kann so die Entleereinheit gegenüber der Verschlusseinheit ausgerichtet werden. Die Systemschnittstelle kann mindestens einen Näherungssensor aufweisen, mit dem insbesondere ein Anliegen der Systemschnittstelle an dem Verschlusselement detektierbar ist. Vorzugsweise ist unmittelbar neben jedem des mindestens einen Verbindungsmittels einer des mindestens eine Näherungssensors angeordnet. Sobald die Systemschnittstelle an der Verschlusseinheit anliegt, können die Entleereinheit und die Verschlusseinheit mittels des mindestens einen Verbindungsmittels miteinander gekoppelt werden.

Anschließend kann die Betätigungseinheit mit dem Verschlusselement verbunden werden, vorzugsweise indem das Schnellspannsystem das an dem Verschlusselement angeordnete Spannelement einspannt. Die Betätigungseinheit kann einen Betätigungsantrieb, beispielsweise in Form eines Betätigungszylinders, umfassen, mittels der das Schnellspannsystem entlang der Öffnungslängsachse bewegbar ist. Durch eine vertikale Bewegung des Schnellspannsystems nach oben kann das Verschlusselement zum Starten eines Schüttgutausflusses durch die Entleeröffnung von der Schließposition in die Öffnungsposition verschoben werden. Zum Stoppen des Schüttgutausflusses kann das Verschlusselement gleichermaßen durch eine entgegengesetzte vertikale Bewegung des Schnellspannsystems nach unten von der Öffnungsposition in die Schließposition verschoben werden. Dabei können Zugkräfte von dem Schnellspannsystem auf das Verschlusselement übertragen werden.

Nachdem sich das Verschlusselement wieder in der Schließposition befindet, kann das Schnellspannsystem geöffnet, das mindestens eine Verbindungsmittel gelöst und die Entleereinheit mittels der Hubeinheit von dem Containersystem weg, also nach unten, verschoben werden. Abschließend kann das Containersystem von der Entleerstation abgenommen werden.

Ein Ausführungsbeispiel der Erfindung wird anhand der nachfolgenden Figuren erläutert. Es zeigt:
- Figur 1: eine perspektivische Darstellung eines Ausführungsbeispiels eines Containersystems,
- Figur 2: eine Seitenansicht des in Fig. 1 gezeigten Containersystems mit markiertem Detail P,
- Figur 3: eine Teilschnittansicht des in Fig. 2 markierten Details P mit markiertem Detail R,
- Figur 3a: eine Detailansicht des in Fig. 3 markierten Details R,
- Figur 3b: eine perspektivische Darstellung eines Ausführungsbeispiels einer Verschlussvorrichtung,
- Figur 4: eine perspektivische Darstellung eines Ausführungsbeispiels einer Entleerstation,
- Figur 5: eine Schnittansicht der in Fig. 4 gezeigten Entleerstation mit markiertem Detail B,
- Figur 6: eine Detailansicht des in Fig. 5 markierten Details B.

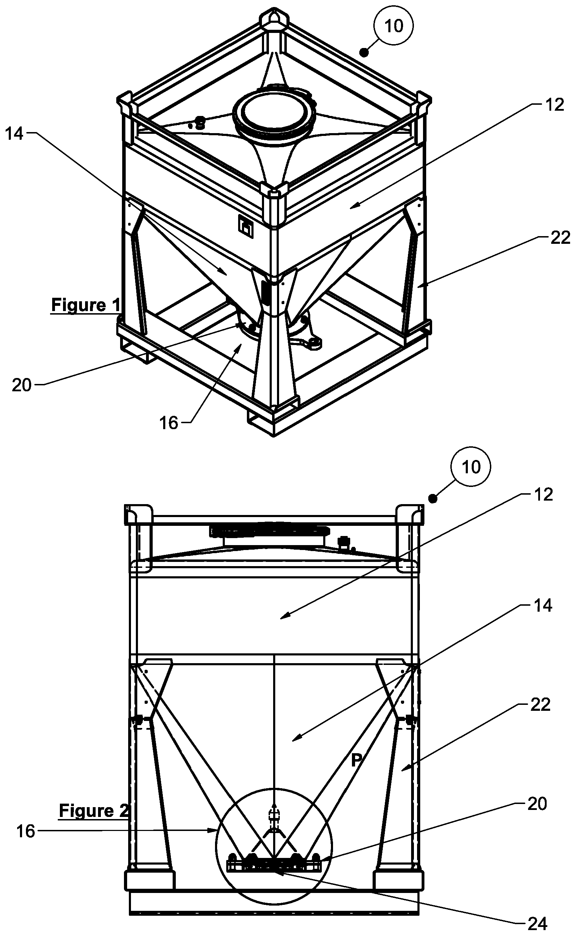

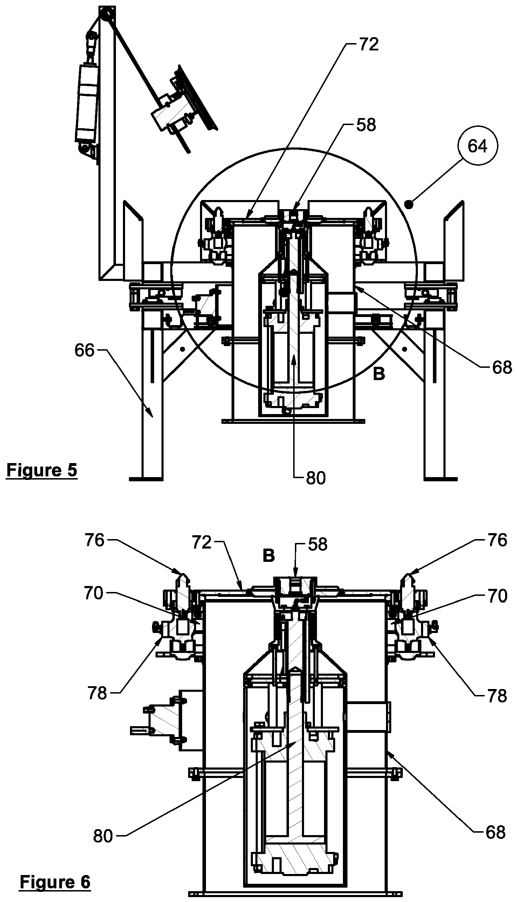

Die Figuren 1 bis 6 zeigen verschiedene Ausführungsbeispiele. Für gleiche und funktionsgleiche Teile werden die gleichen Bezugszeichen verwendet. Der Übersichtlichkeit halber werden nicht alle Bezugszeichen in jeder Figur verwendet.

Fig. 1 zeigt eine perspektivische Ansicht eines Containersystems 10. Das Containersystem 10 umfasst einen Schüttgutcontainer 12, der vorzugsweise einen integrierten, vorzugsweise konisch ausgebildeten Auslasstrichter 14 aufweist. An einem verjüngten Ende 16 des Auslasstrichters 14 ist vorzugsweise eine Containerauslassöffnung 18 angeordnet. An der Containerauslassöffnung 18 kann wiederum ein Containerflansch 20 angeordnet sein.

Beim bestimmungsgemäßen Gebrauch des Schüttgutcontainers 12 ist der Auslasstrichter 14, wie in Fig. 1 gezeigt, vorzugsweise vertikal nach unten weisend ausgerichtet. Die Containerauslassöffnung 18 ist vorzugsweise am tiefsten Punkt des Schüttgutcontainers 12 angeordnet. Die Darstellung in Fig. 1 zeigt ebenfalls, dass der Schüttgutcontainer 12 eine Containertragstruktur 22 umfassen kann.

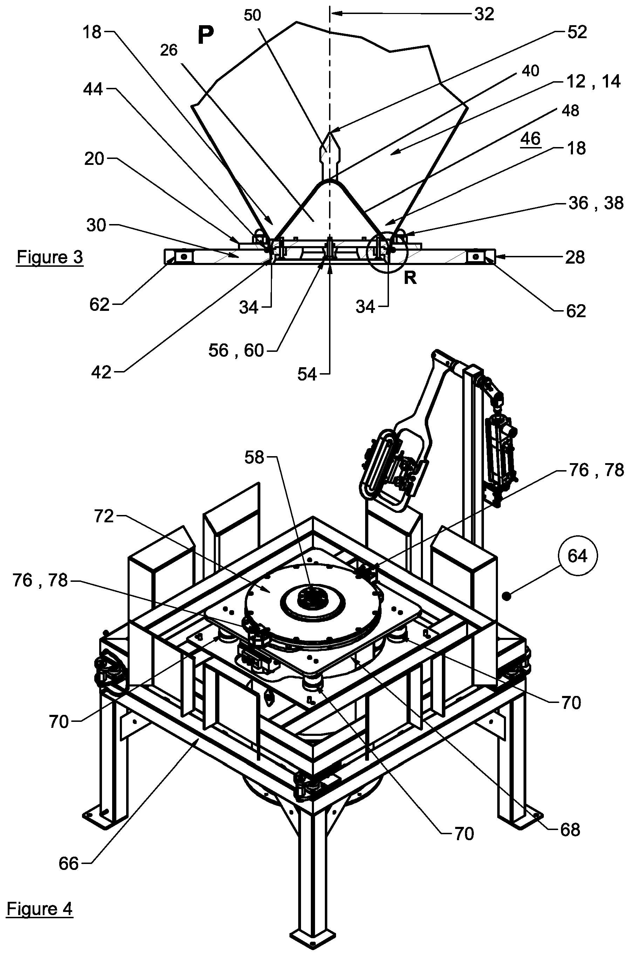

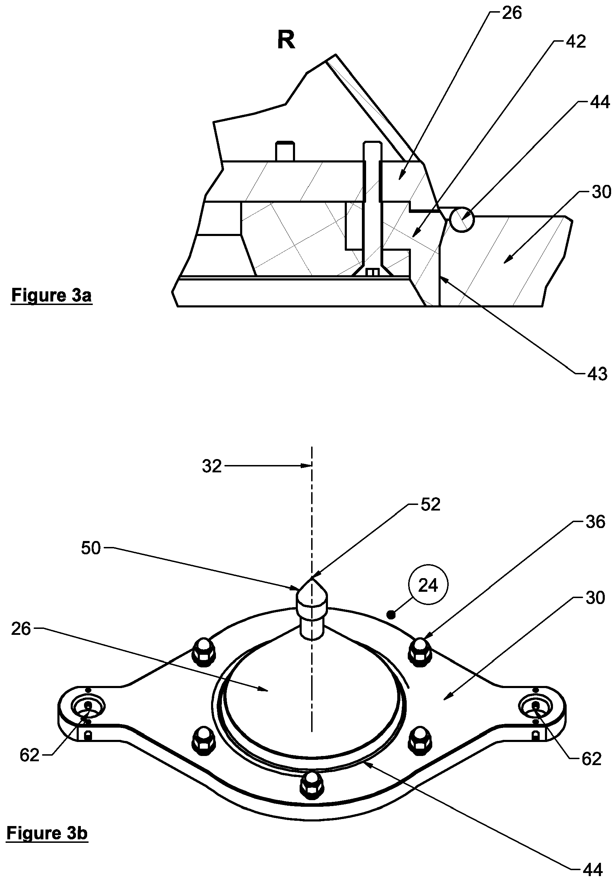

In Fig. 2 ist erkennbar, dass an dem Containerflansch 20 eine Verschlusseinheit 24 angeordnet ist, die im Folgenden anhand der Ansichten in Fig. 3, 3a u. 3b detaillierter beschrieben werden soll.

Die Verschlusseinheit 24 umfasst ein Verschlusselement 26 und eine Trägereinheit 28 mit einem Trägerelement 30 und einer in dem Trägerelement 30 angeordneten, eine Öffnungslängsachse 32 aufweisende Entleeröffnung 34. Das Verschlusselement 26 ist zwischen einer Schließposition, in der das Verschlusselement 26 die Entleeröffnung 34 verschließt, und einer Öffnungsposition, in der das Verschlusselement 26 die Entleeröffnung 34 zumindest teilweise freigibt, vorzugsweise entlang der Öffnungslängsachse 32, verschiebbar. Fig. 3-3b zeigen die Schließposition. Darüber hinaus weist die Trägereinheit 28, vorzugsweise Gewindestifte ausgebildete und an dem Trägerelement 30 angeordnete, Containerverbindungsmittel 36 zum zerstörungsfrei lösbaren Anordnen der Verschlusseinheit 24 an dem Schüttgutcontainer 12 auf. Aus Fig. 3 ist erkennbar, dass die Containerverbindungsmittel 36 mittels einer Schraubverbindung 38 an dem Containerflansch 20 angeordnet sind.

Wie insbesondere aus Fig. 3 u. 3b erkennbar ist, ist das Verschlusselement 26 vorzugsweise kegelförmig ausgebildet, und besonders bevorzugt derart an dem Trägerelement 30 angeordnet, dass eine Kegelspitze 40 des Verschlusselements 26 von dem Trägerelement 30 weg weist. Ein maximaler Außendurchmesser des Verschlusselements 26 ist vorzugsweise kleiner als ein minimaler Innendurchmesser der Containerauslassöffnung 18 ausgebildet. Das Trägerelement 30 ist vorzugsweise plattenförmig ausgebildet. Die Öffnungslängsachse 32 kann zentral in der Entleeröffnung 34 angeordnet sein. Vorzugsweise ist das Verschlusselement 26 entlang der Öffnungslängsachse 32 verschiebbar.

Vorzugsweise weist das Verschlusselement 26 eine Verschlussdichtung 42 auf, die in der Schließposition an dem Trägerelement 30 anliegt. Die Fig. 3 u. 3a zeigen dabei, dass in der dargestellten Schließposition vorzugsweise das Verschlusselement 26 mit der Verschlussdichtung 42 ausschließlich an der Trägereinheit 28, nicht aber an dem Schüttgutcontainer 12 anliegt Der dichtende Schließkontakt erfolgt damit zwischen dem Verschlusselement 26 und der Trägereinheit 30 und ist somit unabhängig von dem Schüttgutcontainer 12. Vorzugsweise ist die Verschlussdichtung 42 in der Schließposition radial an einem Rand 43 der Entleeröffnung 34 angeordnet, bezogen auf die Öffnungslängsachse 32.

In der in den Fig. 3-3b gezeigten Schließposition ist das Verschlusselement 26 vorzugsweise in der Containerauslassöffnung 18 angeordnet. In der Öffnungsposition kann das Verschlusselement 26 gegenüber der Schließposition weiter in den Schüttgutcontainer 12 hinein verschoben sein. Dadurch kann zwischen der Verschlussdichtung 42 und dem Rand 43 der Entleeröffnung 34 eine Lücke geschaffen werden, sodass das Verschlusselement 26 die Entleeröffnung 34 zumindest teilweise freigibt.

Die Trägereinheit 28 kann eine Flanschdichtung 44 aufweisen, die, bezogen auf die Öffnungslängsachse 32, radial außerhalb der Verschlussdichtung 42 angeordnet ist. Vorzugsweise ist die Flanschdichtung 44 radial innerhalb der Containerverbindungsmittel 36 angeordnet. Wenn die Verschlusseinheit 24 an dem Schüttgutcontainer 12 angeordnet ist, ist die Flanschdichtung 44 vorzugsweise zwischen dem Containerflansch 20 und dem Trägerelement 30 angeordnet, sodass die Verbindung des Schüttgutcontainers 12 und der Verschlusseinheit 24 zur Umgebung 46 hin abgedichtet werden kann. Durch den Durchmesser der Flanschdichtung 44 kann ein maximaler Innendurchmesser der Containerauslassöffnung 18 vorgegeben sein.

An einer Oberseite 48 des Verschlusselements 26 kann ein entlang der Öffnungslängsachse 32 ausgerichteter Stößel 50 angeordnet sein, der, wie Fig. 3 zeigt, dafür vorgesehen ist, in den Schüttgutcontainer 12 hineinzuragen. Dadurch kann der Entstehung von Schüttgutbrücken im Schüttgutcontainer 12 entgegengewirkt werden. Vorzugsweise ist der Stößel 50 auf der Kegelspitze 40 des Verschlusselements 26 angeordnet. Vorzugsweise ist der Stößel 50 damit zentral über der Entleeröffnung 34 angeordnet. Ein gegenüber der Kegelspitze 40 angeordnetes Ende 52 des Stößels 50 kann spitz ausgebildet sein.

An einer Unterseite 54 des Verschlusselements 26 kann ein Spannelement 56 zum unmittelbaren Zusammenwirken mit einem Schnellspannsystem 58 angeordnet sein. Das Spannelement 56 kann auf der Öffnungslängsachse 32 angeordnet sein. Das Spannelement 56 ist damit vorzugsweise gegenüber der Kegelspitze 40 des Verschlusselements 26 angeordnet. Vorzugsweise ist das Spannelement 56 als Spannzapfen 60 ausgebildet.

Die Trägereinheit 28 kann mehrere als Bohrung, insbesondere Gewindebohrung, ausgebildete Stationsverbindungsmittel 62 zum Koppeln der Verschlusseinheit 24 mit einer Entleerstation 64 aufweisen. Jedes der Stationsverbindungsmittel 62 kann derart ausgebildet sein, dass die Entleerstation 64 mit dem jeweiligen Stationsverbindungsmittel 62 verriegelt werden kann. Vorzugsweise sind die Stationsverbindungsmittel 62 bezogen auf die Öffnungslängsachse 32 radial außerhalb der Containerverbindungsmittel 36 angeordnet.

Die Entleerstation 64, insbesondere für das zuvor beschriebene Containersystem 10, ist in den Fig. 4-6 gezeigt. Die Entleerstation 64 umfasst eine Stationstragstruktur 66, eine Entleereinheit 68 und eine Hubeinheit 70. Dabei ist die Entleereinheit 68 gegenüber der Stationstragstruktur 66 mittels der Hubeinheit 70, vorzugsweise vertikal, verschiebbar gelagert. Außerdem weist die Entleereinheit 68 eine Systemschnittstelle 72 zum Anordnen der Entleereinheit 68 an dem Containersystem 10 auf.

Wie insbesondere in den Fig. 4 u. 5 erkennbar ist, umfasst die Systemschnittstelle 72 eine Betätigungseinheit 74 zum Betätigen des Containersystems 10 und vorzugsweise zwei von der Betätigungseinheit 72 verschiedene, jeweils einen Verriegelungszapfen 76 umfassendes Verbindungsmittel 78 zum unmittelbaren Verbinden der Entleereinheit 68 mit dem Containersystem 10. Die Betätigungseinheit 74 umfasst das Schnellspannsystem 58, mit dem sie vorzugsweise unmittelbar mit dem Spannzapfen 60 der Verschlusseinheit 24 koppelbar ist.

Mittels der Verriegelungszapfen 76 kann die Position der Entleerstation 64 gegenüber dem Containersystem 10 in allen Freiheitsgraden festgelegt werden. Beide Verriegelungszapfen 76 kann drehbar ausgebildet sein, sodass mittels jedem der Verriegelungszapfen 76 eine Verriegelung nach dem Prinzip eines Bajonettverschlusses herstellbar ist. Mittels der Verriegelungszapfen 76 kann außerdem die Entleereinheit 68 gegenüber der Verschlusseinheit 24 ausgerichtet werden.

Ein Containerentleersystem umfasst das Containersystem 10 sowie die Entleerstation 64. Dabei sind die Verriegelungszapfen 76 der Entleerstation 64 unmittelbar mit den Stationsverbindungsmitteln 62 koppelbar, und das Verschlusselement 26 ist mittels einer Vertikalbewegung der Betätigungseinheit 74 von der Schließposition in die Öffnungsposition und zurück bewegbar. Dazu kann die Betätigungseinheit 74 einen Betätigungszylinder 80 aufweisen. Vorzugsweise sind die Verriegelungszapfen 76 derart mit der Verschlusseinheit 24 koppelbar, dass die Systemschnittstelle 72 an der Verschlusseinheit 24, besonders bevorzugt an der Unterseite 54 des Verschlusselements 26, anliegt.

Das Entleeren des Schüttgutcontainers 12 mit dem Containerentleersystem kann folgendermaßen erfolgen:

Zunächst kann das Containersystem 10 auf der Entleerstation 64 angeordnet werden, vorzugsweise indem die Containertragstruktur 22 auf der Stationstragstruktur 66 angeordnet wird. Anschließend kann die Entleereinheit 68 mittels der Hubeinheit 70 in Richtung des Containersystems 10, also nach oben, verschoben werden. Auf diese Weise kann die Systemschnittstelle 72 auf die Verschlusseinheit 24 zu bewegt werden. Sobald die Verriegelungszapfen 76 mit dem mindestens einen Stationsverbindungsmittel 62 in Wirkverbindung tritt, kann so die Entleereinheit 68 gegenüber der Verschlusseinheit 24 ausgerichtet werden. Sobald die Systemschnittstelle 72 an der Verschlusseinheit 24 anliegt, können die Entleereinheit 68 und die Verschlusseinheit 24 mittels der Verriegelungszapfen 76 miteinander gekoppelt werden.

Anschließend kann die Betätigungseinheit 74 mit dem Verschlusselement 26 verbunden werden, vorzugsweise indem das Schnellspannsystem 58 den Spannzapfen 60 einspannt. Durch eine mittels des Betätigungszylinders 80 veranlasste Bewegung des Schnellspannsystems 58 entlang der Öffnungslängsachse 32 nach oben kann das Verschlusselement 26 zum Starten eines Schüttgutausflusses durch die Entleeröffnung 34 von der in Fig. 3 dargestellten Schließposition in die Öffnungsposition verschoben werden. Zum Stoppen des Schüttgutausflusses kann das Verschlusselement 26 gleichermaßen durch eine entgegengesetzte vertikale Bewegung des Schnellspannsystems 58 nach unten von der Öffnungsposition in die Schließposition verschoben werden. Dabei können Zugkräfte von dem Schnellspannsystem 58 auf das Verschlusselement 26 übertragen werden.

Nachdem sich das Verschlusselement 26 wieder in der Schließposition befindet, kann das Schnellspannsystem 58 geöffnet, die Verriegelungszapfen 76 gelöst und die Entleereinheit 68 mittels der Hubeinheit 70 von dem Containersystem 10 weg, also nach unten, verschoben werden. Abschließend kann das Containersystem 10 von der Entleerstation 64 abgenommen werden.

### Bezugszeichenliste

- 10: Containersystem
- 12: Schüttgutcontainer
- 14: Auslasstrichter
- 16: verjüngtes Ende
- 18: Containerauslassöffnung
- 20: Containerflansch
- 22: Containertragstruktur
- 24: Verschlusseinheit
- 26: Verschlusselement
- 28: Trägereinheit
- 30: Trägerelement
- 32: Öffnungslängsachse
- 34: Entleeröffnung
- 36: Containerverbindungsmittel
- 38: Schraubverbindung
- 40: Kegelspitze
- 42: Verschlussdichtung
- 43: Rand
- 44: Flanschdichtung
- 46: Umgebung
- 48: Oberseite
- 50: Stößel
- 52: Ende
- 54: Unterseite
- 56: Spannelement
- 58: Schnellspannsystem
- 60: Spannzapfen
- 62: Stationsverbindungsmittel
- 64: Entleerstation
- 66: Stationstragstruktur
- 68: Entleereinheit
- 70: Hubeinheit
- 72: Systemschnittstelle
- 74: Betätigungseinheit
- 76: Verriegelungszapfen
- 78: Verbindungsmittel
- 80: Betätigungszylinder

## Patentansprüche

1. Verschlusseinheit (24) für einen Schüttgutcontainer (12), umfassend
• ein Verschlusselement (26) und
• eine Trägereinheit (28) mit einem Trägerelement (30) und einer in dem Trägerelement (30) angeordneten, eine Öffnungslängsachse (32) aufweisende Entleeröffnung (34),
wobei das Verschlusselement (26) zwischen einer Schließposition, in der das Verschlusselement (26) die Entleeröffnung (34) verschließt, und einer Öffnungsposition, in der das Verschlusselement (26) die Entleeröffnung (34) zumindest teilweise freigibt, verschiebbar ist, und wobei die Trägereinheit (28) Containerverbindungsmittel (36) zum zerstörungsfrei lösbaren Anordnen der Verschlusseinheit (24) an dem Schüttgutcontainer (12) aufweist.

2. Verschlusseinheit nach Anspruch 1,
**dadurch gekennzeichnet, dass** die Containerverbindungsmittel (36) Gewindebohrungen und/oder Gewindestifte umfassen.

3. Verschlusseinheit nach einem der vorhergehenden Ansprüche, **dadurch gekennzeichnet, dass** das Verschlusselement (26) eine Verschlussdichtung (42) aufweist, die in der Schließposition an dem Trägerelement (28) anliegt.

4. Verschlusseinheit nach Anspruch 3,
**dadurch gekennzeichnet, dass** die Trägereinheit (28) eine Flanschdichtung (44) aufweist, die, bezogen auf die Öffnungslängsachse (32), radial außerhalb der Verschlussdichtung (42) angeordnet ist.

5. Verschlusseinheit nach einem der vorhergehenden Ansprüche, **dadurch gekennzeichnet, dass** an einer Oberseite (48) des Verschlusselements (26) ein entlang der Öffnungslängsachse (32) ausgerichteter Stößel (50) angeordnet ist.

6. Verschlusseinheit nach einem der vorhergehenden Ansprüche, **dadurch gekennzeichnet, dass** das Verschlusselement (26), vorzugsweise an einer Unterseite (54), ein Spannelement (56) zum unmittelbaren Zusammenwirken mit einem Schnellspannsystem (58) aufweist.

7. Verschlusseinheit nach einem der vorhergehenden Ansprüche, **dadurch gekennzeichnet, dass** die Trägereinheit (28) mindestens ein Stationsverbindungsmittel (62) zum Koppeln der Verschlusseinheit (24) mit einer Entleerstation (64) aufweist.

8. Verschlusseinheit nach Anspruch 7,
**dadurch gekennzeichnet, dass** das mindestens eine Stationsverbindungsmittel (62) bezogen auf die Öffnungslängsachse (32) radial außerhalb der Containerverbindungsmittel (36) angeordnet ist.

9. Containersystem (10) umfassend eine Verschlusseinheit (24) nach einem der vorhergehenden Ansprüche und einen Schüttgutcontainer (12) mit einer Containerauslassöffnung (18) und einem an der Containerauslassöffnung (18) angeordneten Containerflansch (20), wobei die Containerverbindungsmittel (36) der Verschlusseinheit (24) an dem Containerflansch (20) angeordnet sind.

10. Containersystem nach Anspruch 9,
**dadurch gekennzeichnet, dass** das Verschlusselement (26) in der Schließposition in der Containerauslassöffnung (18) angeordnet ist.

11. Containersystem nach einem der Ansprüche 9 bis 10, **dadurch gekennzeichnet, dass** das Verschlusselement (26) in der Öffnungsposition gegenüber der Schließposition weiter in den Schüttgutcontainer (12) hinein verschoben ist.

12. Entleerstation (64) für ein Containersystem (10), insbesondere nach einem der Ansprüche 9 bis 11, mit einer Stationstragstruktur (66), einer Entleereinheit (68), und einer Hubeinheit (70),
• wobei die Entleereinheit (68) gegenüber der Stationstragstruktur (66) mittels der Hubeinheit (70) verschiebbar gelagert ist,
• wobei die Entleereinheit (68) eine Systemschnittstelle (72) zum Anordnen der Entleereinheit (68) an dem Containersystem (10) aufweist, und
• wobei die Systemschnittstelle (72) eine Betätigungseinheit (74) zum Betätigen des Containersystems (10) umfasst,
**dadurch gekennzeichnet, dass** die Systemschnittstelle (72) mindestens ein von der Betätigungseinheit (74) verschiedenes Verbindungsmittel (78) zum unmittelbaren Verbinden der Entleereinheit (68) mit dem Containersystem (10) aufweist.

13. Entleerstation nach Anspruch 12,
**dadurch gekennzeichnet, dass** die Betätigungseinheit (74) ein Schnellspannsystem (58) zum unmittelbaren Zusammenwirken mit dem Containersystem (10) aufweist.

14. Entleerstation nach einem der Ansprüche 12 bis 13, **dadurch gekennzeichnet, dass** das mindestens eine Verbindungsmittel (78) einen drehbar angeordneten Verriegelungszapfen (76) zum Anordnen der Entleereinheit (68) an dem Containersystem (10) umfasst.

15. Containerentleersystem mit einem Containersystem (10) nach einem der Ansprüche 9 bis 11 und einer Entleerstation (64) nach einem der Ansprüche 12 bis 14, **dadurch gekennzeichnet, dass** das mindestens eine Verbindungsmittel(78) der Entleerstation (64) unmittelbar mit der Verschlusseinheit (24) koppelbar ist, und das Verschlusselement (26) mittels der Betätigungseinheit (74) von der Schließposition in die Öffnungsposition und zurück bewegbar ist.
